# EUROPÄISCHE PATENTSCHRIFT

(11) **EP 1 002 920 B1**
(45) Veröffentlichungstag und Bekanntmachung des Hinweises auf die Patenterteilung: **05.08.2009**
(21) Anmeldenummer: 99122479.1
(22) Anmeldetag: 11.11.1999
(51) Int. Cl.: E05B 65/32, E05B 17/22, E05F 15/20, E05F 15/00, G01S 13/42, G01S 13/04

(54) **Automatisches Türöffnungssystem**
Automatic door opening system
Système d'ouverture automatique de porte

(30) Priorität: 19.11.1998 DE 19853344
(43) Veröffentlichungstag der Anmeldung: 24.05.2000
(73) Patentinhaber: Volkswagen Aktiengesellschaft, 38436 Wolfsburg (DE)
(72) Erfinder: Busse, Gerald, Dr., 31141 Hildesheim (DE)

(56) Entgegenhaltungen:
- WO-A-97/17520
- DE-A- 3 622 091
- US-A- 4 458 446
- US-A- 4 833 469
- PATENT ABSTRACTS OF JAPAN vol. 008, no. 147 (P-285), 10. Juli 1984 (1984-07-10) & JP 59 046570 A (FUJI JUKOGYO KK), 15. März 1984 (1984-03-15)

## Beschreibung

Die Erfindung betrifft ein automatisches Türöffnungssystem gemäß dem Oberbegriff des Patentanspruchs 1.

Mittels derartiger Systeme kann auf Anforderung die Tür so weit geöffnet werden wie es durch eventuelle Hindernisse im Türöffnungsbereich der mit dem Türöffnungssystem ausgestatteten Vorrichtung, insbesondere eines Kraftfahrzeuges, möglich ist. Mittels derartiger Systeme können Objekte, die ortsfeste Hindernisse darstellen, vor oder bei Öffnung der Tür erkannt werden, so daß Beschädigungen an der Tür oder an dem im Öffnungsbereich der Tür befindlichen Hindernis vermieden werden. Des weiteren können Unfälle durch sich in den Schwenkbereich der Tür bewegende Hindernisse oder Personen vermieden werden.

Ein automatisches Türöffnungssystem ist beispielsweise aus der DE 195 33 804 A1 bekannt, welches eine hilfskraftbetätigte Feststellvorrichtung zur Begrenzung des Türöffnungswinkels aufweist, wobei ein berührungsfrei arbeitender Sensor vorgesehen ist, der an dem der Verschwenkachse der Tür abgekehrten äußeren Türrand angeordnet ist. Der Sensor löst bei Annäherung an einen dem Fahrzeug benachbarten Gegenstand während des Öffnens der Tür in einem definierten Abstand der Tür zu dem Gegenstand nahezu verzögerungsfrei die Feststellvorrichtung im Sinne einer Verriegelung aus. Durch den am hinteren Rand der Tür angeordneten Sensor kann zwar der Abstand zu einem benachbarten Fahrzeug bestimmt werden, eine zuverlässige Erfassung des Öffnungsbereichs der Tür oder des der Tür zugeordneten Verkehrsgeschehens ist hierdurch jedoch nicht möglich.

Aus der DE 195 37 619 A1 ist eine Einrichtung, insbesondere zur Überwachung des Verkehrsraumes eines Kraftfahrzeuges, bekannt, die zumindest einen Verkehrsraumsensor zur Erfassung eines sich dem Fahrzeug nähernden Körpers und einer dazugehörigen Signalanlage aufweist, wobei bei der Annäherung eines Körpers die Öffnung zumindest einer Tür des Fahrzeuges verhindert, erschwert oder blockiert wird und/oder durch eine Signalanlage die Annäherung angezeigt wird. Der Verkehrsraumsensor ist dabei derart ausgebildet und angebracht, daß im wesentlichen die Verkehrssituation hinter dem Fahrzeug überwacht wird. Eine sichere Überwachung des Verkehrsgeschehens, das von einer Türöffnung betroffen ist, ist dabei nur unvollständig möglich.

Die Vorrichtung, die das Eindringen des Objektes in den vorgegebenen Bereich anzeigt, kann dabei als Warneinrichtung ausgebildet sein oder das Öffnen der Tür verhindern, erschweren oder blockieren.

Ein Warnsystem mit Abstandssensoren zur Erfassung einer Relativgeschwindigkeit und eines Abstands zwischen einem Fahrzeug und einem möglichen Hindernis in Fahrtrichtung ist in der Druckschrift US 4,833,469 vorgestellt. Ein Warnsignal wird von dem Warnsystem in den Situationen bereitgestellt, in welchen das Wertepaar für die erfasste Relativgeschwindigkeit und den erfassten Abstand eine Sicherheitsvorgabe überschreitet.

Des Weiteren ist in der Druckschrift WO 97/17520 ein Türkontrollgerät beschrieben, welches eine Sensoreinrichtung mit bis zu drei fest positionierten Ultraschallsensoren aufweist. Alle drei Ultraschallsensoren sind oberhalb einer Fahrzeugtür an der Fahrzeugaußenwand befestigt und so ausgerichtet, dass ein Objekt in einem Teilbereich der zugehörigen Türöffnung erfassbar sein soll.

Die US 4,458,446 offenbart ein Gerät zum Öffnen und/oder Schließen einer Fahrzeugtür eines Fahrzeugs mit einem an dem Fahrzeug angebrachten Sensor zum Erfassen eines Hindernisses innerhalb einer Umgebung der Fahrzeugtür. Der Sensor kann beispielsweise an einem Türgriff, einer Abdichtung, einer Zierleiste oder einem Außenspiegel angeordnet werden.

Die DE 36 22 091 A1 beschreibt ein Fahrbahnwechsel-Warnsystem für ein Fahrzeug zum Erfassen eines Objekts auf einer Fahrbahn des Fahrzeugs. Zur Objekterfassung dienende Sensoren des Fahrbahnwechsel-Warnsystems werden in den Blinkergehäusen, an einer Fahrzeugtür, an einem Fahrzeugheck oder auf einem Fahrzeugdach angebracht.

Der Erfindung liegt die Aufgabe zugrunde, ein Türöffnungssystem mit einer verbesserten Objekterfassung zur Unterscheidung zwischen einem Objekt und einer Bodenreflexion im Bereich einer zugehörigen Fahrzeugtür bereitzustellen.

Die Lösung des technischen Problems ergibt sich durch die Merkmale des Patentanspruchs 1. Dabei ist das erfindungsgemäße Türöffnungssystem **dadurch gekennzeichnet, dass** die Sensoreinrichtung mindestens zwei Antennen zum Bestimmen der Höhe des Objektes aufweist, welche auf verschiedenen Höhen am Fahrzeug angeordnet sind.

Vorteilhafte Weiterbildungen sind in den Unteransprüchen beschrieben.

Durch die erfindungsgemäße Ausbildung der Sensoreinrichtung kann die Position eines Objektes in dem vorgegebenen Bereich sicher erfaßt werden. Der vorgegebene Bereich kann dem unmittelbaren Schwenkbereich der Tür, ggf. zuzüglich ein Sicherheitsabstandes, entsprechen. Vorteilhafterweise erstreckt sich der überwachte Bereich über einen größeren Bereich, der sich über die Fahrzeuglänge oder auch darüber hinaus erstrecken kann und der eine Breite von einigen Metern, z.B. bis zu zwei Metern, von der der Tür zugeordneten Seite der entsprechenden Vorrichtung aufweist.

Gemäß einer ersten Variante des Türöffnungssystems kann die Bedienperson, zum Beispiel der Fahrer eines Kraftfahrzeuges, das der Tür zugeordnete Geschehen, zum Beispiel das Verkehrsgeschehen, selbständig überwachen. Auf Anforderung wird die Tür so weit geöffnet, wie es durch eventuelle Hindernisse im Türöffnungsbereich des Fahrzeuges möglich ist. Durch das erfindungsgemäße Türöffnungssystem, das mehrzielfähig ausgelegt sein kann, können Hindernisse, insbesondere ortsfeste Hindernisse, in einem spezifizierten Volumenbereich vor der Tür erkannt und deren Position(en) gemessen werden. Dies betrifft sowohl die geschlossene als auch die teilweise oder vollständig geöffnete Tür. Durch eine zugeordnete Feststelleinrichtung kann dann die Tür verriegelt werden oder um ein vorbestimmtes Maß geöffnet werden. Des weiteren kann die zur Öffnung der Tür erforderliche Kraft oder die Türöffnungsgeschwindigkeit eingestellt werden, gegebenenfalls in Abhängigkeit von dem Abstand zu dem erfaßten Objekt. Vorteilhafterweise ist die Sensoreinrichtung derart ausgebildet, daß die Höhe eines Objektes im gesamten Türöffnungsbereich bezüglich des Bezugskoordinatensystems absolut bestimmbar ist. Die Höhenerfassung kann bis auf eine vorgegebene Maximalhöhe beschränkt sein, die der Maximalhöhe der geöffneten Tür, ggf. zusätzlich eines vorbestimmten Sicherheitsabstandes, entsprechen kann. Unter Höhe ist zu verstehen der Öffnungsradius der Tür. Auch kann mit dem System die Objekthöhe, also die Höhe des Objektes vorteilhafterweise ermittelt werden.

Alternativ kann die Höhenerfassung sich auch auf vorgegebene Höhenbereiche in dem Bezugskoordinatensystem beziehen, z.B. auf einen Bereich von 0,5 bis 1 m, wobei lediglich das Eindringen eines Objektes in den Höhenbereich angezeigt wird.

Das Bezugskoordinatensystem ist dabei in seiner räumlichen Beziehung zu der die Tür aufweisenden Vorrichtung definiert.

Insgesamt kann so ein Objekt nicht nur bezüglich seiner Position in einer Ebene sondern in seiner räumlich-dreidimensionalen Beziehung zu der Vorrichtung bestimmt werden, sowie auch bezüglich der Richtungs- und/oder Geschwindigkeitsänderung in diesen Dimensionen.

Vorteilhafterweise weist die Sensoreinrichtung zusätzlich ein ACC-System (adaptive bzw. automatic cruise control als automatische Fahrtregelung) auf, bei welchem eine azimutale Triangulation der Objekte in einer Ebene konstanter Höhe erfolgt, um die Objekte zu erfassen. Der in Bewegungsrichtung der Vorrichtung vor bzw. hinter der Tür liegende Raum kann so zuverlässig erfaßt werden. Insgesamt kann so das Verkehrsgeschehen automatisch überwacht werden, wobei auf Anforderung die Tür erst dann geöffnet wird, wenn die Verkehrssituation es zuläßt. Des weiteren wird die Öffnungsweite der Tür automatisch nur so weit geöffnet, wie es durch eventuelle Hindernisse im Türöffnungsbereich des Fahrzeuges möglich ist. Insbesondere können sämtliche bewegten Objekte in einem spezifizierten türseitigen Bereich bezüglich ihrer Position, Bewegungsrichtung und Geschwindigkeit vermessen werden, so daß das ACC-System mehrzielfähig ist.

Durch das erfindungsgemäße System ist nicht nur eine azimutale Triangulation der Objekte in einer Ebene konstanter Höhe durch das ACC-System möglich sondern z.B. zur Überwachung des Verkehrsgeschehen auch die Höhe von Objekten, die sich im Raumbereich vor der Tür befinden meßbar. Die Sensoreinrichtung kann so ausgebildet sein, daß die Überwachung erst bei Anforderung der Türöffnung erfolgt.

Das erfindungsgemäße Türöffnungssystem ist bei jeder Art von Türen einsetzbar, insbesondere für Fahrer-, Beifahrer- und Fondtüren sowie Hecktüren bzw. Heckklappen, die sich gegebenenfalls auch nach oben öffnen können.

Um den Schwenkbereich der Tür vollständig in einem vorgegebenen Bereich objektmäßig erfassen zu können, kann eine Phased-Array-Antenne eingesetzt werden, die insbesondere über einen sehr großen Winkelbereich, zum Beispiel über 90 oder 180°, verschwenkbar ist. Das Phased-Array-System kann planar ausgeführt sein, wobei ein hinsichtlich der Amplitude und Phase ansteuerbarer Einzelstrahler vorgesehen sein kann.

Vorzugsweise sind mehrere, z.B. drei bis fünf, Antennen vorgesehen, die vorzugsweise jeweils eine breite Richtcharakteristik aufweisen. Die Position eines Objektes kann dann mit Hilfe eines dreidimensionalen Triangulationsalgorithmus ermittelt werden. Die Strahlerelemente können auf der gleichen oder auch auf verschiedenen Höhen am Fahrzeug befestigt sein.

Die Strahler sind vorzugsweise bei 77 GHz zu betreiben. Die Antennen sind vorzugsweise unabhängig von deren konkreter Ausführungsform planar ausgestaltet.

Die Antennen können insbesondere an Zierleisten, in Fensterrahmen, Außenspiegeln, Blinkern, Rückleuchten bzw. Frontscheinwerfem und/ oder Radnaben bzw. im Umgebungsbereich der genannten Einrichtungen angeordnet sein. Die Antennen sind vorzugsweise über eine möglichst große Länge des Fahrzeuges verteilt, um den Türöffnungsbereich sicher erfassen zu können. Im Türbereich angeordnete Antennen können sowohl auf der angeschlagenen als auch auf der freien Seite der Tür angeordnet sein. Insbesondere können mehrere einander zugeordnete Antennen, die insgesamt der Erfassung eines Objektes dienen, im Bereich zwischen den Achsen eine Fahrzeuges angeordnet sein oder sich vor bzw. hinter der jeweiligen Achse im Front- bzw. Heckbereich des Fahrzeuges befinden.

Die Antennen können bezüglich des 3 dB-Abfalls einen Öffnungswinkel von ca. 80 bis 120° oder darüber hinaus aufweisen, wobei in Abhängigkeit von der Richtcharakteristik auch außerhalb dieses Bereiches detektiert werden kann.

Die Sensoreinrichtung des Türöffnungssystems kann unabhängig von der jeweiligen Variante einen kapazitiven Sensor, Videosensor, Infrarotsensor und/oder Ultraschallsensor aufweisen. Vorzugsweise werden Radarsensoren, insbesondere als Nahbereichsradar, eingesetzt, die eine besonders flache Bauform aufweisen, unempfindlich gegenüber Verschmutzungen sind und eine Überwachung eines Winkelbereichs von 180° bezüglich Azimut und Elevation über einen radialen Bereich von zwei Metern ermöglichen.

Ferner ist es vorteilhaft, wenn die Abstandsdetektion zu dem Objekt fortlaufend, also dynamisch, geschieht. D. h. eine Abstandserfassung wird beim Bewegen des Fahrzeugs bzw. beim Bewegen der Tür, beim bewegten Objekt, weiter durchgeführt um entsprechende Reflektionsfehler zu vermeiden. Neben dieser Erfassung ist es auch noch möglich Sensoren einzusetzen, die im Nahbereich der Tür eine Abtastung vornehmen und falls sich ein Gegenstand in diesen Nahbereich hineinbewegt oder sich die Tür in Richtung Gegenstand bewegt eine Art Schutzschildfunktion ausgeführt wird. Diese Schutzschildfunktion kann beinhalten das Abgeben eines Signaltons, das Stoppen der Funktion Türöffnen und eine automatische Türschließung soweit, daß dem aussteigenden Benutzer kein Schaden zugefügt wird.

Auch wäre es möglich, daß die Schutzschildfunktion derart ausgestaltet ist, daß die Tür so starr wie möglich in der sich befindenden Position gehalten wird. Dieses wäre vorteilhaft, wenn ein Radfahrer in den Nahbereich hineinfährt und die Tür dann nicht den aussteigenden Benutzer einklemmt. Ferner kann der Radfahrer in dieser Situation sich an der fast starr angeordneten Tür festhalten und ist nicht zusätzlich gefährdet da er keine halt an dem bewegbaren Objekt bekommt.

Die Antennenanordnung zur Objekterfassung kann mono- und/oder bistatisch ausgeführt sein.

### Die Erfindung wird nachfolgend anhand der Figuren beschrieben. Es zeigen:

- Figur 1: ein Türöffnungssystem mit drei zwischen den Fahrzeugachsen angeordneten Antennen, dargestellt ist die horizontale Verteilung der Antennen inklusive ihrer azimuthalen Richtdiagramme,
- Figur 2: ein Türöffnungssystem mit drei Antennen, die im Endbereich des Fahrzeuges angeordnet sind, dargestellt ist der vertikale Verteilung der Antennen inklusive ihrer Richtdiagramme bezüglich der Elevation,
- Figur 3: zeigt ein Radarmodul und
- Figur 4 - 7: zeigen unterschiedliche Positionserfassungen.

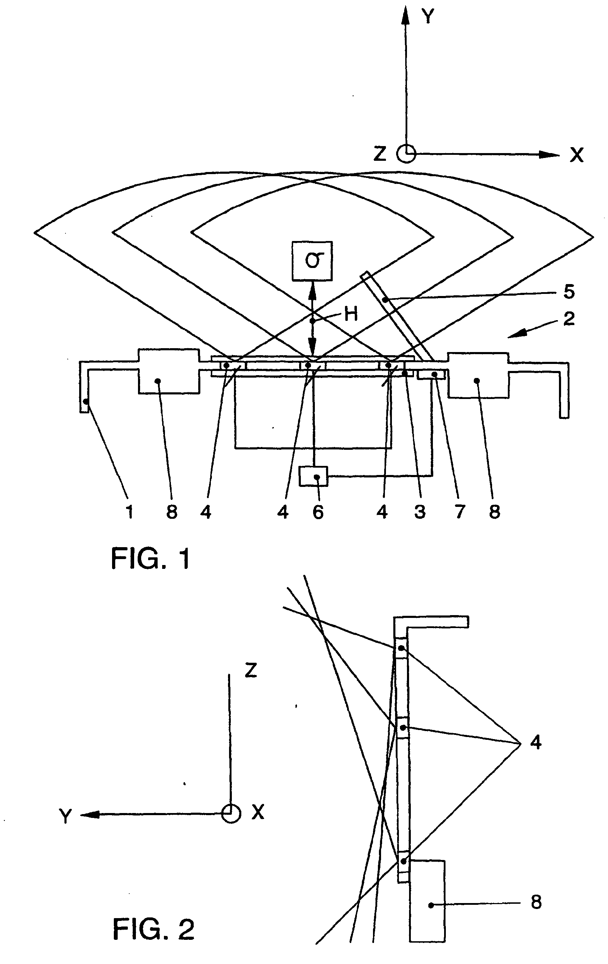

Figur 1 zeigt ein Kraftfahrzeug 1 mit einem Türöffnungssystem 2, das eine Sensoreinrichtung 3 mit drei Antennen 4 zur Positionsbestimmung eines Objektes in einem spezifizierten Volumenbereich vor der Tür 5 aufweist. Die Antennen 4 sind als Radarantennen ausgeführt und bilden ein vollständiges Triangulationssystem zur Positionsbestimmung des Objektes hinsichtlich des Abstandes bezüglich eines bestimmten Bezugspunktes des Fahrzeuges sowie der Höhe (H) des Objektes.

Die Richtcharakteristik der Antennen ist anhand des 3 dB-Abfalls wiedergegeben.

Die Antennen 4 sind jeweils in einer unterschiedlichen Höhe an dem Fahrzeug angeordnet und werden mit einer Frequenz von 77 GHz betrieben.

Die Antennen 4 sind mit einer Rechnereinrichtung 6 gekoppelt, die mittels eines dreidimensionalen Triangulationsalgorithmus ein Objekt in dem angezeigten Bereich erfassen kann.

Die Rechnereinrichtung 6 ist mit der Türbegrenzungseinrichtung 7 gekoppelt, die in Abhängigkeit von der Erfassung eines Objektes die Tür verriegelt oder eine manuelle Öffnung der Tür ermöglicht. Die Sensoreinrichtung sowie die Türöffnungseinrichtung 7 sind derart ausgeführt, daß die Tür bis zu einem vorgegebenen Abstand zu einem in dem Türöffnungsbereich befindlichen Objekt geöffnet werden kann. Des weiteren wird durch die Türbegrenzungseinrichtung 7 der Türöffnungswiderstand, dessen Überwindung zur Öffnung der Tür notwendig ist, kontinuierlich mit sich verringerndem Abstand zu dem erfaßten Objekt erhöht.

Die Antennen 4 sind in dem gezeigten Ausführungsbeispiel zwischen den Fahrzeugachsen 8 angeordnet.

Figur 2 zeigt ein Türöffnungssystem, welches demjenigen gemäß Figur 1 entspricht. Die Antennen 4 werden hier jedoch nicht bezüglich ihrer horizontalen Verteilung, sondern ihrer vertikalen Verteilung dargestellt.

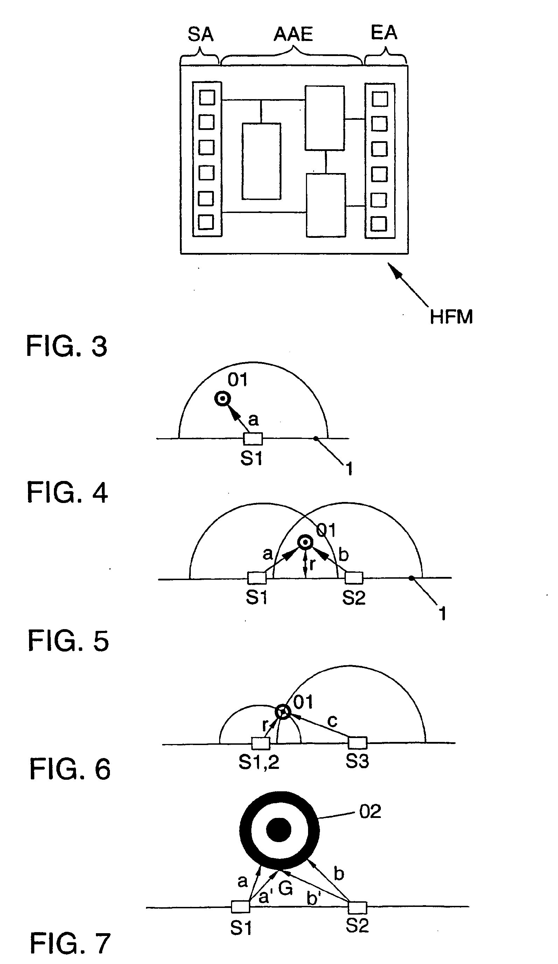

Figur 3 zeigt ein Radarmodul. Zwischen der Senderantenne SA und der Empfangsantenne EA ist die Ansteuer- und Auswerteelektronik AAE angeordnet. Das Hochfrequenzmodul HFM befindet sich auf der Rückseite. Mit diesem Radarmodul wird im GHz-Frequenzbereich die Messung vorgenommen mit einer Genauigkeit von +-4 cm. Das Radarmodul ist umweltunabhängig und hat ein hohes Integrationspotential. Eine Auslegung ist auf bis zu 20 Meter möglich. Für den Nahbereich kann die Auslegung jedoch entsprechend reduziert werden.

Figur 4 bis 7 zeigen unterschiedliche Positionserfassungen. Figur 4 zeigt eine Abstandserfassung a mit einem einzelnen Sensor S1. Das Objekt O1 hat ein kleines Reflektionszentrum. Der Abstand a kann nur vom Sensor S1 zum Reflektionszentrum des Objektes O1 erfaßt werden, jedoch der Abstand vom Objekt O1 zum Kraftfahrzeug 1 mit genauer Positionsbestimmung ist mit diesem Einstrahlsystem schwer möglich. Wird hingegen von dem Objekt O1 auch noch eine Bildaufnahme getätigt, könnte anhand der Meßwerte eine Positionsbestimmung ermöglicht werden.

Figur 5 zeigt die Sensoren S1, S2 mit dessen Hilfe die Abstände a und b ermittelt werden. Mittels Triangulation wird dann der Abstand R zum Fahrzeug 1 berechent. In Figur 6 sind drei Sensoren S1 - S3 dargestellt, so daß neben der Entfernung auch noch eine Höhenermittlung stattfinden kann.

Figur 7 zeigt ein Objekt O2, welches kein identisches Reflektionszentrum besitzt. Dieses kann vorkommen, wenn das Objekt derart gestaltet ist, daß von den Sensoren S1 und S2 die ermittelten Abstände a, b, nicht von einem Reflektionszentrum herführen, sondern von anderen Reflektionsstellen. Dadurch das eine Messung zu unterschiedlichen Zeitpunkten und z. B. beim bewegten Objekt oder bei bewegten Sensoren, die sich z. B. an der Tür befinden können, durchgeführt wird ist es möglich, die Grenzbereiche G des Objektes O2 zu ermitteln.

## Patentansprüche

1. Automatisches Türöffnungssystem, für Kraftfahrzeuge, mit einer Sensoreinrichtung zur Erfassung von Objekten in einem vorgegebenen Bereich um das Fahrzeug und einer zumindest einer Tür zugeordneten Vorrichtung, die das Eindringen des Objektes in den vorgegebenen Bereich anzeigt, wobei die Sensoreinrichtung (3) derart ausgebildet ist, daß die Höhe (H) des sich in dem vorgegebenen Bereich befindlichen Objektes relativ zu einem vorgegebenen Bezugskoordinatensystem erfaßbar ist **dadurch gekennzeichnet, dass** die Sensoreinrichtung (3) mindestens zwei Antennen zum Bestimmen der Höhe des Objektes aufweist, welche auf verschiedenen Höhen am Fahrzeug angeordnet sind.

2. Türöffnungssystem nach Anspruch 1, **dadurch gekennzeichnet, daß** die Höhe (H) des Objektes in dem Bezugskoordinatensystem absolut bestimmbar ist.

3. Türöffnungssystem nach Anspruch 1, **dadurch gekennzeichnet, daß** die Höhe des Objektes in dem Bezugskoordinatensystem bezüglich eines Schwellwertes oder Höhenbereichs bestimmbar ist.

4. Türöffnungssystem nach einem der Ansprüche 1 bis 3, **dadurch gekennzeichnet, daß** die Sensoreinrichtung (3) ein ACC-System aufweist.

5. Türöffnungssystem nach einem der Ansprüche 1 bis 4, **dadurch gekennzeichnet, daß** mehrere zusammenwirkende Antennen (4) mit breiter Richtcharakteristik zur kooperierenden Objekterfassung vorgesehen sind.

6. Türöffnungssystem nach einem der Ansprüche 1 bis 5, **dadurch gekennzeichnet, daß** eine Rechnereinrichtung (6) mit einem dreidimensionalen Triangulationsalgorithmus zur Bestimmung der Objektposition vorgesehen ist.

7. Türöffnungssystem nach einem der Ansprüche 1 bis 6, **dadurch gekennzeichnet, daß** das Türöffnungssystem (2) mehrzielfähig ausgebildet ist.

8. Türöffnungssystem nach einem der Ansprüche 1 bis 7, **dadurch gekennzeichnet, daß** an der Fahrzeugoberfläche angebrachte Einrichtungen der Sensoreinrichtung (3) planar ausgebildet sind.

9. Türöffnungssystem nach einem der Ansprüche 1 bis 8, **dadurch gekennzeichnet, dass** die mindestens zwei Antennen an Zierleisten, in Fensterrahmen, Außenspiegeln, Blinkern, Rückleuchten, Frontscheinwerfern und/oder Radnaben angeordnet sind.

10. Türöffnungssystem nach einem der Ansprüche 1 bis 9, **dadurch gekennzeichnet, dass** die mindestens zwei Antennen über eine große Länge des Fahrzeuges verteilt sind.

## Claims

1. Automatic door-opening system for motor vehicles, having a sensor device for detecting objects in a predefined region around the vehicle, and an apparatus which is associated with at least one door and indicates the entry of the object into the predefined region, with the sensor device (3) being designed in such a way that the height (H) of the object located in the predefined region can be detected in relation to a predefined reference coordinate system, **characterized in that** the sensor device (3) has at least two antennas for determining the height of the object, which antennas are arranged on the vehicle at different heights.

2. Door-opening system according to Claim 1,
**characterized in that** the height (H) of the object can be absolutely determined in the reference coordinate system.

3. Door-opening system according to Claim 1,
**characterized in that** the height of the object can be determined with respect to a threshold value or height region in the reference coordinate system.

4. Door-opening system according to one of Claims 1 to 3, **characterized in that** the sensor device (3) has an ACC system.

5. Door-opening system according to one of Claims 1 to 4, **characterized in that** a plurality of interacting antennas (4) with broad directional characteristics are provided for the purpose of cooperative object detection.

6. Door-opening system according to one of Claims 1 to 5, **characterized in that** a computer device (6) with a three-dimensional triangulation algorithm is provided for determining the position of the object.

7. Door-opening system according to one of Claims 1 to 6, **characterized in that** the door-opening system (2) is designed such that has the capability to perform multiple tasks.

8. Door-opening system according to one of Claims 1 to 7, **characterized in that** devices of the sensor device (3) which are mounted on the surface of the vehicle are of planar design.

9. Door-opening system according to one of Claims 1 to 8, **characterized in that** the at least two antennas are arranged on trim strips, in window frames, external mirrors, indicators, rear lights, front headlights and/or wheel hubs.

10. Door-opening system according to one of Claims 1 to 9, **characterized in that** the at least two antennas are distributed over a large length of the vehicle.

## Revendications

1. Système automatique d'ouverture de portière pour véhicules automobiles, comprenant un dispositif de détection pour détecter des objets dans une zone prédéfinie autour du véhicule et un dispositif associé à au moins une portière, lequel dispositif indique la pénétration de l'objet dans la zone prédéfinie, le dispositif de détection (3) étant configuré de telle sorte que la hauteur (H) de l'objet qui se trouve dans la zone prédéfinie peut être détectée en relation avec un système de coordonnées de référence prédéfini, **caractérisé en ce que** le dispositif de détection (3) présente au moins deux antennes pour déterminer la hauteur de l'objet, lesquelles sont disposées à des hauteurs différentes sur le véhicule.

2. Système d'ouverture de portière selon la revendication 1, **caractérisé en ce que** la hauteur (H) de l'objet peut être déterminée de manière absolue dans le système de coordonnées de référence.

3. Système d'ouverture de portière selon la revendication 1, **caractérisé en ce que** la hauteur de l'objet dans le système de coordonnées de référence peut être déterminée par rapport à une valeur de seuil ou à une plage de hauteurs.

4. Système d'ouverture de portière selon l'une des revendications 1 à 3, **caractérisé en ce que** le dispositif de détection (3) présente un système ACC.

5. Système d'ouverture de portière selon l'une des revendications 1 à 4, **caractérisé en ce que** plusieurs antennes (4) qui interagissent entre elles et ayant une caractéristique directionnelle large sont prévues pour une détection d'objet par coopération.

6. Système d'ouverture de portière selon l'une des revendications 1 à 5, **caractérisé en ce qu'**il est prévu un dispositif de calcul (6) avec un algorithme de triangulation tridimensionnel pour déterminer la position de l'objet.

7. Système d'ouverture de portière selon l'une des revendications 1 à 6, **caractérisé en ce que** le système d'ouverture de portière (2) est réalisé avec une capacité de cibles multiples.

8. Système d'ouverture de portière selon l'une des revendications 1 à 7, **caractérisé en ce que** les éléments du dispositif de détection (3) qui sont montés sur la surface du véhicule sont de forme plane.

9. Système d'ouverture de portière selon l'une des revendications 1 à 8, **caractérisé en ce que** les au moins deux antennes sont disposées sur les enjoliveurs, dans les cadres de fenêtre, les rétroviseurs extérieurs, les clignotants, les feux de recul, les phares et/ou les moyeux de roue.

10. Système d'ouverture de portière selon l'une des revendications 1 à 9, **caractérisé en ce que** les au moins deux antennes sont réparties sur une grande longueur du véhicule.
